# EUROPEAN PATENT SPECIFICATION

(11) **EP 2 851 170 B1**
(45) Date of publication and mention of the grant of the patent: **21.08.2019**
(21) Application number: 12876647.4
(22) Date of filing: 14.05.2012
(51) Int. Cl.: B28B 3/20, B01D 39/20, B01D 46/00, F01N 3/022

(54) **METHOD FOR MANUFACTURING HONEYCOMB STRUCTURE**
VERFAHREN ZUR HERSTELLUNG EINER WABENSTRUKTUR
PROCÉDÉ DE FABRICATION D'UNE STRUCTURE EN NID D'ABEILLE

(43) Date of publication of application: 25.03.2015
(73) Proprietor: Ibiden Co., Ltd., Ogaki-shi Gifu 503-8604 (JP)
(72) Inventor: OKUDA Masatoshi, Ibi-gun Gifu 501-0695 (JP)
(74) Representative: Müller-Boré & Partner Patentanwälte PartG mbB
(86) International application number: PCT/JP2012/062306
(87) International publication number: WO 2013/171824

(56) References cited:
- WO-A1-2005/068397
- WO-A1-2007/058007
- JP-A- H07 187 845
- JP-A- 2012 075 989

## Description

The present invention relates to a method for manufacturing a honeycomb structured body.

Particulate matter (hereinafter also referred to as PM) such as soot in exhaust gas discharged from internal combustion engines of vehicles (e.g. buses, trucks, passenger vehicles), construction machines, and the like is an issue that has been recently receiving attention because it has impacts on the environment and affects human health.

This issue has led to the development of various honeycomb structured bodies formed of porous ceramics which function as a filter to capture PM in exhaust gas and purify exhaust gas.

For such honeycomb structured bodies, the porosity is a very important factor that affects the performance as a filter. In order to strike a balance between pressure loss and increasing the amount of supported catalyst, honeycomb structured bodies need to have a high porosity.

Additionally, there is a current expectation that the exhaust gas regulations will be reinforced in the future, and this expectation has created another expectation that honeycomb structured bodies will be required to contain more catalyst. Accordingly, there is a demand for honeycomb structured bodies with a higher porosity.

Patent Literature 1 discloses a method for manufacturing a porous body (a honeycomb structured body) which includes mixing a pore-forming material containing an organic polymer and inorganic particles and aggregate particles into a material for forming molded bodies, molding the material, and firing the molded body.

Patent Literature 1 further discloses a porous body (a honeycomb structured body) having a porosity of 45 to 85%.

Patent Literature 1: WO 2005/068397

JP H07 187845 A describes a ceramic porous body and its production.

WO 2007/058007 A1 describes a honeycomb structure.

JP 2012 075989 A describes a method for manufacturing a honeycomb structure.

Silicon carbide is suitable among other materials for honeycomb structured bodies because of its high heat resistance and high heat conductivity.

In the case where the conventional manufacturing method disclosed in Patent Literature 1 is employed to manufacture a honeycomb structured body made of silicon carbide, silicon carbide particles, which serve as aggregate particles, are fired at approximately 1000°C to 2300°C.

It is known that in the case where the conventional manufacturing method of Patent Literature 1 is employed to manufacture a honeycomb structured body with a porosity of higher than 70%, the degreasing step results in a honeycomb molded body that is prone to deform even by a small external force.

In the case of laboratory-scale manufacture of a honeycomb structured body, such degreased molded bodies can be treated by hand. Unfortunately, scale-up of manufacture of a honeycomb structured body confronts a problem that it is very difficult to transfer such degreased molded bodies by a machine.

The present invention was made to overcome this problem, and an object of the present invention is to provide a method for manufacturing a honeycomb structured body which provides degreased honeycomb molded bodies that can be easily transferred.

A method for manufacturing a honeycomb structured body including a porous silicon carbide honeycomb fired body of claim 1 includes:
a honeycomb molded body preparing step of preparing a honeycomb molded body in which a large number of cells are longitudinally disposed in parallel with one another with a cell wall interposed therebetween;
a degreasing step of degreasing the honeycomb molded body into a honeycomb degreased body; and
a firing step of firing the honeycomb degreased body into the porous silicon carbide honeycomb fired body,
wherein the honeycomb molded body contains silicon carbide particles, pore-forming material particles, and a silicon carbide precursor that is to be converted into silicon carbide at a temperature of higher than a degreasing temperature,
   wherein the ratio between the average particle diameter of the silicon carbide particles and the average particle diameter of the pore-forming material particles (silicon carbide particle):(pore-forming material particle) is 1:40 to 1:200.

For example, one of strategy to manufacture a honeycomb structured body with a high porosity is to prepare a honeycomb molded body containing a higher proportion of pore-forming material. Most of pore-forming material particles in the honeycomb molded body are burnt and removed by the degreasing step to make pores in the areas where the pore-forming material particles exist. Presumably, in the honeycomb molded body after the degreasing step (hereinafter, referred to as honeycomb degreased body), the silicon carbide particles contact with one another to maintain the form of the honeycomb molded body.

Unfortunately, in the case where the conventional manufacturing method of Patent Literature 1 is employed to manufacture a honeycomb structured body with a high porosity, a large amount of pore-forming material particles in a honeycomb molded body are burnt and removed in the degreasing step, leaving fewer contact points between remaining silicon carbide particles in the resulting honeycomb degreased body. This is why the degreased honeycomb molded body hardly maintains its form.

By contrast, according to the method for manufacturing a honeycomb structured body of claim 1, the honeycomb molded body contains a silicon carbide precursor that is to be converted into silicon carbide at a temperature of higher than a degreasing temperature. The silicon carbide precursor is not converted into silicon carbide through the degreasing step.

Namely, the honeycomb degreased body obtained by the method for manufacturing a honeycomb structured body of claim 1 contains the silicon carbide precursor. The silicon carbide precursor in the honeycomb degreased body has a binder function of binding the silicon carbide particles in the honeycomb degreased body together. This prevents the honeycomb degreased body from deforming by a small external force and gives the honeycomb degreased body strength enough to withstand a certain level of external force.

In the case of larger-scale manufacture of a honeycomb structured body, such honeycomb degreased bodies can be easily transferred by a machine.

According to the method for manufacturing a honeycomb structured body of claim 2, the silicon carbide precursor is converted into silicon carbide at a temperature equal to or lower than a firing temperature.

In this case, the silicon carbide precursor in the honeycomb degreased body is converted into silicon carbide in the firing step. This allows the silicon carbide precursor to be incorporated into the resulting silicon carbide honeycomb fired body as silicon carbide, which allows for efficient manufacture of a silicon carbide honeycomb fired body.

According to the method for manufacturing a honeycomb structured body of claim 3, the silicon carbide precursor is converted into silicon carbide at 500°C to 2000°C.

The degreasing step is typically carried out at a temperature of lower than 500°C. This means that the silicon carbide precursor is not converted into silicon carbide through the degreasing step, and remains in the honeycomb degreased body. The firing step is typically carried out at a temperature of higher than 2000°C to sinter silicon carbide. Accordingly, the silicon carbide precursor in the honeycomb degreased body is converted into silicon carbide in the firing step, which allows for efficient manufacture of a silicon carbide honeycomb fired body.

According to the method for manufacturing a honeycomb structured body of claim 4, the silicon carbide precursor is a polymer.

In the case where the silicon carbide precursor is a polymer, the honeycomb degreased body is more likely to maintain its form. This is because the silicon carbide particles have OH groups on the surface, and the OH groups on the surface of the silicon carbide particles are compatible with functional groups of the polymer chain of the silicon carbide precursor so that more silicon carbide particles in the honeycomb degreased body tend to bind to one another.

According to the method for manufacturing a honeycomb structured body of claim 5, the silicon carbide precursor is a polycarbosilane.

The polycarbosilane successfully binds the silicon carbide particles in the honeycomb degreased body together. Additionally, the polycarbosilane is converted into silicon carbide in the firing step, which allows for efficient manufacture of a silicon carbide honeycomb fired body.

According to the method for manufacturing a honeycomb structured body of claim 6, the silicon carbide precursor constitutes 2 to 10% by weight of the honeycomb molded body.

If the silicon carbide precursor constitutes less than 2% by weight of the honeycomb molded body, the silicon carbide precursor constitutes only a small proportion of the honeycomb degreased body, and may not produce the effect of maintaining the form of the honeycomb degreased body.

On the other hand, if the silicon carbide precursor constitutes more than 10% by weight of the honeycomb molded body, the proportion of the silicon carbide particles in the honeycomb molded body is small so that the honeycomb degreased body contains less contact points between the silicon carbide particles. Accordingly, the honeycomb degreased body is less likely to maintain its form.

According to the method for manufacturing a honeycomb structured body of claim 7, the ratio between the weight of silicon carbide particles contained in the honeycomb molded body and the weight of pore-forming material particles contained in the honeycomb molded body (silicon carbide particle):(pore-forming material particle) is 20:80 to 40:60.

In the case where the weight ratio between the silicon carbide particles and the pore-forming material particles is within the above range, it is possible to provide a honeycomb degreased body that can maintain its form and a silicon carbide honeycomb fired body with a high porosity.

If the ratio of the silicon carbide particles is larger than the above range, that is, the ratio of the pore-forming material particles is small, the silicon carbide honeycomb fired body obtained through the firing step may not have a sufficient porosity.

On the other hand, if the ratio of the silicon carbide particles is smaller than the above range, that is, the ratio of the pore-forming material particles is too large, the honeycomb degreased body obtained through the degreasing step has too many pores. The honeycomb degreased body is less likely to maintain its form although it contains the silicon carbide precursor.

According to the method for manufacturing a honeycomb structured body of claim 1, the ratio between the average particle diameter of the silicon carbide particles and the average particle diameter of the pore-forming material particles (silicon carbide particle):(pore-forming material particle) is 1:40 to 1:200.

In the case where the average particle diameter of the silicon carbide particles is smaller than the average particle diameter of the pore-forming material particles, the spaces between the pore-forming material particles are more densely filled with the silicon carbide particles, compared to the case where both the particles have the same average particle diameter. In particular, in the case where the ratio between the average particle diameters of the silicon carbide particles and the pore-forming material particles is within the above range, the spaces between the pore-forming material particles are more densely filled with the silicon carbide particles, increasing the number of contact points between the silicon carbide particles in the honeycomb degreased body. Accordingly, the honeycomb degreased body is more likely to maintain its form.

According to the method for manufacturing a honeycomb structured body of claim 8, the pore-forming material particles are acrylic resin particles.

Since the acrylic resin is thermally decomposed at a temperature equal to or lower than 400°C, most of the acrylic resin is burnt and removed by the degreasing step. Accordingly, pores can be successfully formed in the silicon carbide honeycomb fired body by using the acrylic resin as the pore-forming material.

When the acrylic resin is thermally decomposed in a non-oxidative atmosphere, the decomposition is an endothermic reaction, which is less likely to generate local heat. This prevents the honeycomb molded body from partially deforming due to heat. As a result, the silicon carbide honeycomb fired body is less likely to have cracks.

According to the method for manufacturing a honeycomb structured body of claim 9, the honeycomb molded body preparing step includes molding a ceramic material containing the silicon carbide particles, the pore-forming material particles, and the silicon carbide precursor that is to be converted into silicon carbide at a temperature of higher than the degreasing temperature into the honeycomb molded body.

Namely, the method may include a step of forming a honeycomb molded body before the degreasing step.

A honeycomb structured body manufactured by the method for manufacturing a honeycomb structured body of any one of claims 1 to 9, which further contains a catalyst supported on the cell wall can be suitably used as a filter for purifying exhaust gas.
Fig. 1(a) is a perspective view schematically illustrating an example of honeycomb molded bodies formed by a method for manufacturing a honeycomb structured body according to the first embodiment of the present invention, and Fig. 1(b) is an A-A line cross-sectional view of the honeycomb molded body of Fig. 1(a).
Fig. 2 is an enlarged view of the honeycomb molded body of Figs. 1(a) and 1(b).
Fig. 3 is an enlarged view of a honeycomb degreased body obtained by degreasing the honeycomb molded body of Fig. 2.
Fig. 4 is a perspective view schematically illustrating one example of honeycomb structured bodies obtained by the first embodiment of the present invention.
Fig. 5(a) is a perspective view schematically illustrating one example of silicon carbide honeycomb fired bodies constituting the honeycomb structured body of Fig. 4, and Fig. 5(b) is a B-B line cross-sectional view of the silicon carbide honeycomb fired body of Fig. 5(a).
Fig. 6(a) is a perspective view schematically illustrating one example of honeycomb structured bodies obtained by another embodiment of the present invention, and Fig. 6(b) is a C-C line cross-sectional view of the honeycomb structured body of Fig. 6(a).

The following specifically demonstrates embodiments of the present invention. The following embodiments are not to be construed as limiting the scope of the present invention, and various modifications can be appropriately made within the scope of the present invention.

### (First embodiment)

The following demonstrates the first embodiment, which is an embodiment of the method for manufacturing a honeycomb structured body of the present invention.

The method for manufacturing a honeycomb structured body including a porous silicon carbide honeycomb fired body according to the first embodiment of the present invention includes:
a honeycomb molded body preparing step of preparing a honeycomb molded body in which a large number of cells are longitudinally disposed in parallel with one another with a cell wall interposed therebetween;
a degreasing step of degreasing the honeycomb molded body into a honeycomb degreased body; and
a firing step of firing the honeycomb degreased body into the porous silicon carbide honeycomb fired body,
wherein the honeycomb molded body contains silicon carbide particles, pore-forming material particles, and a silicon carbide precursor that is to be converted into silicon carbide at a temperature of higher than a degreasing temperature,
   wherein the ratio between the average particle diameter of the silicon carbide particles and the average particle diameter of the pore-forming material particles (silicon carbide particle): (pore-forming material particle) is 1:40 to 1:200.

The following demonstrates the steps.

### (a) Honeycomb molded body preparing step

The honeycomb molded body preparing step is carried out to prepare a honeycomb molded body in which a large number of cells are longitudinally disposed in parallel with one another with a cell wall interposed therebetween.

A honeycomb molded body can be prepared by various methods, and for example, the honeycomb molded body can be formed by molding a ceramic material containing silicon carbide particles, pore-forming material particles and a silicon carbide precursor.

Specifically, first of all, the silicon carbide powder, the pore-forming material, the silicon carbide precursor, an organic binder, a plasticizer, a lubricant, and water are mixed to prepare a ceramic material (wet mixture) for forming honeycomb molded bodies.

Next, the wet mixture is charged into an extruder, and extrusion-molded, and the resulting molded product is cut into a predetermined length. Thus, a raw honeycomb molded body having a predetermined shape is obtained.

The raw honeycomb molded body is then dried by using a drying apparatus such as a microwave drying apparatus, a hot-air drying apparatus, a dielectric drying apparatus, a reduced-pressure drying apparatus, a vacuum drying apparatus, or a freeze drying apparatus. In this manner, a honeycomb molded body is obtained. For the drying of the raw honeycomb molded body, a microwave drying apparatus and a hot-air drying apparatus may be used in combination to completely remove water in the honeycomb molded body, or the honeycomb molded body may be dried to a certain water content with a microwave drying apparatus, and then dried with a hot-air drying apparatus to completely remove water in the honeycomb molded body.

The term "honeycomb molded body" used herein is intended to include raw honeycomb molded bodies as well.

In the method for manufacturing a honeycomb structured body according to the first embodiment of the present invention, the silicon carbide precursor is to be converted into silicon carbide at a temperature of higher than the degreasing temperature in a later-described degreasing step.

The silicon carbide precursor is preferably converted into silicon carbide at a temperature equal to or lower than the firing temperature in a later-described firing step. In this case, the silicon carbide precursor in the honeycomb degreased body is converted into silicon carbide in the firing step. This allows the silicon carbide precursor to be incorporated into the resulting silicon carbide honeycomb fired body as silicon carbide, which allows for efficient manufacture of a silicon carbide honeycomb fired body.

In the method for manufacturing a honeycomb structured body according to the first embodiment of the present invention, the silicon carbide precursor is more preferably converted into silicon carbide at 500°C to 2000°C, and still more preferably at 500°C to 800°C.

The degreasing step is typically carried out at a temperature of lower than 500°C. This means that the silicon carbide precursor is not converted into silicon carbide through the degreasing step, and remains in the honeycomb degreased body. The firing step is typically carried out at a temperature of higher than 2000°C to sinter silicon carbide. Accordingly, the silicon carbide precursor in the honeycomb degreased body is converted into silicon carbide in the firing step, which allows for efficient manufacture of a silicon carbide honeycomb fired body.

In the method for manufacturing a honeycomb structured body according to the first embodiment of the present invention, the silicon carbide precursor is not particularly limited, but preferably contains a carbosilane bond.

In this case, more preferably, the ratio between the numbers of silicon atoms and carbon atoms in the silicon carbide precursor (silicon atom) : (carbon atom) is 1:1 to 1:5. In the case where the ratio between the numbers of silicon atoms and carbon atoms in the silicon carbide precursor is within the above range, carbon atoms and silicon atoms tend to react at a 1:1 ratio, thereby generating more silicon carbide and less by-product.

In the method for manufacturing a honeycomb structured body according to the first embodiment of the present invention, the silicon carbide precursor may be a monomer or may be a polymer, but is preferably a polymer. More preferably, the silicon carbide precursor is a polymer having a backbone containing a carbosilane bond.

In the case where the silicon carbide precursor is a polymer, OH groups on the surface of silicon carbide particles are compatible with functional groups of the polymer chain of the silicon carbide precursor so that more silicon carbide particles in the honeycomb degreased body tend to bind to one another. Accordingly, the silicon carbide particles in the honeycomb degreased body after the degreasing step are less likely to separate, and the honeycomb degreased body is more likely to maintain its form.

The term "polymer" used herein is intended to include oligomers (e.g. dimer, trimer) as well.

Specific examples of the silicon carbide precursor include polycarbosilanes (for example, "Tyranno polymer VZ-100" available from Ube Industries, Ltd.) and hybrid materials of phenolic resin and an alkoxysilane bound to reactive groups of the phenolic resin (for example, "COMPOCERAN P" available from Arakawa Chemical Industries, Ltd.). Polycarbosilanes are preferable among these. In the case where the silicon carbide precursor is a polycarbosilane, the silicon carbide particles in the honeycomb degreased body desirably bind to one another. Since the temperature at which the polycarbosilane is converted into silicon carbide is approximately 600°C, the polycarbosilane is not converted into silicon carbide through the degreasing step. The polycarbosilane can be certainly converted into silicon carbide in the later-described firing step.

The honeycomb molded body may contain only one kind or two or more kinds of silicon carbide precursors.

The polycarbosilane has a backbone represented by the following formula (wherein R is a hydrogen atom or a lower alkyl or phenyl group) . The number of carbon atoms in the lower alkyl group is preferably 1 to 4.

The number average molecular weight of the polycarbosilane is preferably 200 to 10000, and more preferably 1000 to 5000.

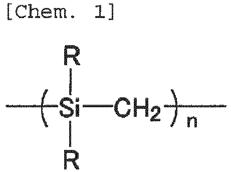

The polycarbosilane may be a modified polycarbosilane that is modified with an organic metal compound.

In the case where the silicon carbide precursor is a polycarbosilane, the wet mixture may be prepared using a solution of the polycarbosilane dissolved in a non-polar organic solvent.

Examples of non-polar organic solvents that dissolve the polycarbosilane include hydrocarbon solvents, aromatic solvents, and furan solvents. Specifically, as examples of the hydrocarbon solvents, mention may be made of hexane, as examples of the aromatic solvents, mention may be made of xylene and toluene, and as examples of the furan solvents, mention may be made of tetrahydrofuran.

The concentration of the polycarbosilane solution is not particularly limited, but is preferably 30 to 65% by weight, and more preferably 50 to 60% by weight.

In the method for manufacturing a honeycomb structured body according to the first embodiment of the present invention, the proportion of the silicon carbide precursor in the honeycomb molded body is not particularly limited, but the silicon carbide precursor preferably constitutes 2 to 10% by weight, more preferably 3 to 7% by weight, of the honeycomb molded body.

If the silicon carbide precursor constitutes less than 2% by weight of the honeycomb molded body, the silicon carbide precursor constitutes only a small proportion of the honeycomb degreased body, and may not produce the effect of maintaining the form of the honeycomb degreased body after the later-described degreasing step.

On the other hand, if the silicon carbide precursor constitutes more than 10% by weight of the honeycomb molded body, the proportion of the silicon carbide particles in the honeycomb molded body is small so that the honeycomb degreased body contains less contact points between the silicon carbide particles. Accordingly, the honeycomb degreased body is less likely to maintain its form.

In the method for manufacturing a honeycomb structured body according to the first embodiment of the present invention, the kind of the pore-forming material particles is not particularly limited, but pore-forming material particles that can be burnt and removed in the later-described degreasing step are preferable. Such pore-forming material particles that can be burnt and removed in the degreasing step will leave pores in a silicon carbide honeycomb fired body obtained through the subsequent step.

Specific examples of the pore-forming material include acrylic resin, starch, brewers grains, and walnut shells. The honeycomb molded body may contain only one kind or two or more kinds of pore-forming materials.

The pore-forming material particles in the honeycomb molded body are preferably acrylic resin particles, and more preferably spherical acrylic resin particles.

In the method for manufacturing a honeycomb structured body according to the first embodiment of the present invention, the proportion of the pore-forming material particles in the honeycomb molded body is not particularly limited, but the pore-forming material particles preferably constitutes 20 to 50% by weight, more preferably 25 to 40% by weight, of the honeycomb molded body.

The average particle diameter of the pore-forming material particles in the honeycomb molded body is not particularly limited, but is preferably 20 to 100 µm, and more preferably 30 to 60 µm.

In the method for manufacturing a honeycomb structured body according to the first embodiment of the present invention, the proportion of the silicon carbide particles in the honeycomb molded body is not particularly limited, but the silicon carbide particles preferably constitutes 5 to 40% by weight, more preferably 10 to 30% by weight of the honeycomb molded body.

The average particle diameter of the silicon carbide particles in the honeycomb molded body is not particularly limited, but is preferably 0.2 to 5 µm, and more preferably 0.4 to 1 µm.

The term "average particle diameter" herein refers to the volume-based median particle diameter.

The following briefly and specifically describes how to measure the particle diameter. The size of particles (particle diameter) is typically expressed as a distribution of the abundance of each particle diameter class from accumulated measurements of a large number of particles. The distribution of the abundance of each particle diameter class refers to "particle size distribution". The particle size distribution can be measured by, for example, a laser diffraction/scattering method based on volume-based measurement. Such a method measures the particle size distribution based on the assumption that particles are spherical. The obtained particle size distribution is converted into a cumulative distribution, and from this distribution, the median diameter (the particle diameter that divides the particles into two groups: a group of particles with smaller particle diameters; and a group of particles with larger particle diameters, both of which include the same amount of particles) can be calculated.

In the method for manufacturing a honeycomb structured body according to the first embodiment of the present invention, the ratio between the weight of the silicon carbide particles contained in the honeycomb molded body and the weight of the pore-forming material particles contained in the honeycomb molded body is not particularly limited, but the weight ratio (silicon carbide particle) : (pore-forming material particle) is preferably 20:80 to 40:60, and more preferably 25:75 to 35:65.

In the case where the weight ratio between the silicon carbide particles and the pore-forming material particles is within the above ranges, it is possible to provide a honeycomb degreased body that can maintain its form and a silicon carbide honeycomb fired body with a high porosity.

If the ratio of the silicon carbide particles is larger than the above ranges, that is, the ratio of the pore-forming material particles is small, the silicon carbide honeycomb fired body obtained through the firing step may not have a sufficient porosity.

On the other hand, if the ratio of the silicon carbide particles is smaller than the above range, that is, the ratio of the pore-forming material particles is too large, the honeycomb degreased body obtained through the degreasing step has too many pores. The honeycomb degreased body is less likely to maintain its form although it contains the silicon carbide precursor.

In the method for manufacturing a honeycomb structured body according to the first embodiment of the present invention, the ratio between the weight of the silicon carbide particles contained in the honeycomb molded body and the weight of the silicon carbide precursor contained in the honeycomb molded body (silicon carbide particle) : (silicon carbide precursor) is preferably 90:10 to 60:40, and more preferably 80:20 to 70:30.

In the method for manufacturing a honeycomb structured body according to the first embodiment of the present invention, the ratio between the average particle diameter of the silicon carbide particles and the average particle diameter of the pore-forming material particles (silicon carbide particle) : (pore-forming material particle) in the honeycomb molded body is 1:40 to 1:200, and preferably 1:60 to 1:100.

In the case where the average particle diameter of the silicon carbide particles is smaller than the average particle diameter of the pore-forming material particles, the spaces between the pore-forming material particles are more densely filled with the silicon carbide particles, compared to the case where both the particles have the same average particle diameter. In particular, in the case where the ratio between the average particle diameters of the silicon carbide particles and the pore-forming material particles is within the above range, the spaces between the pore-forming material particles are more densely filled with the silicon carbide particles, increasing the number of contact points between the silicon carbide particles in the honeycomb degreased body. Accordingly, the honeycomb degreased body is more likely to maintain its form.

The following demonstrates a honeycomb molded body formed as described above.

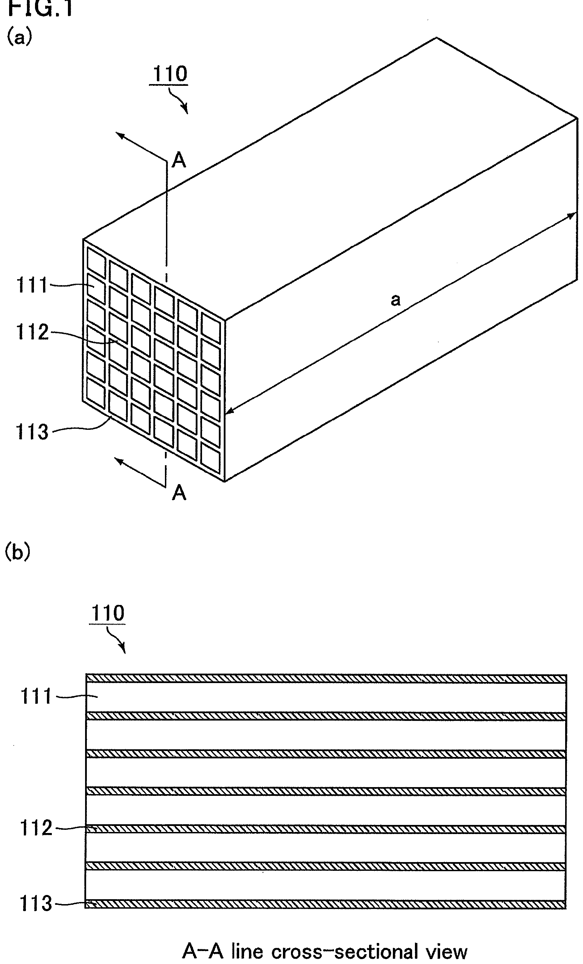

Fig. 1(a) is a perspective view schematically illustrating an example of honeycomb molded bodies formed by a method for manufacturing a honeycomb structured body according to the first embodiment of the present invention, and Fig. 1(b) is an A-A line cross-sectional view of the honeycomb molded body of Fig. 1(a).

The honeycomb molded body 110 shown in Figs. 1(a) and 1(b) includes a large number of cells 111 disposed in parallel with one another along the longitudinal direction (the direction indicated by the arrow "a" in Fig. 1(a)) with a cell wall 112 interposed therebetween, and its periphery is constituted by an outer wall 113.

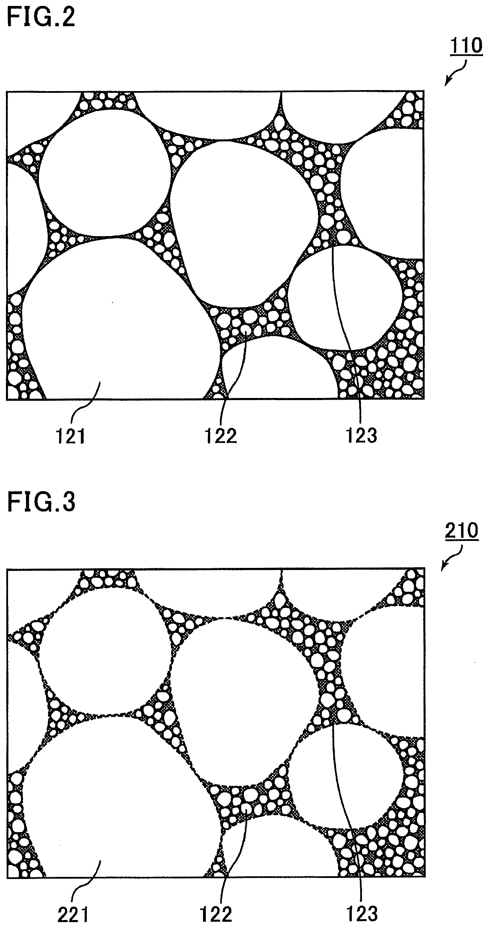

Fig. 2 is an enlarged view of the honeycomb molded body of Figs. 1(a) and 1(b).

The honeycomb molded body 110 shown in Fig. 2 contains pore-forming material particles 121. In the spaces between pore-forming material particles 121, silicon carbide particles 122 and a silicon carbide precursor 123 are present.

### (b) Degreasing step

The degreasing step is carried out to degrease the honeycomb molded body into a honeycomb degreased body.

In the degreasing step, the honeycomb molded body obtained by the honeycomb molded body preparing step is heated to burn and remove organic matter in the honeycomb molded body.

In the degreasing step, the degreasing temperature is not particularly limited, but is preferably 250°C to 600°C, more preferably 300°C to 500°C, and 300°C to 480°C.

If the degreasing temperature is lower than 250°C, the organic matter in the honeycomb molded body may not be sufficiently burnt and removed, leaving a portion of the organic matter between silicon carbide particles. This may hinder sintering of the silicon carbide particles in the later-described firing step.

On the other hand, if the degreasing temperature is higher than 600°C, the silicon carbide precursor may be partially converted into silicon carbide. In this case, the honeycomb degreased body is less likely to maintain its form.

The period of degreasing in the degreasing step is not particularly limited, but is preferably 60 to 240 minutes. In the case where the degrease period is within the above range, the organic matter in the honeycomb molded body can be successfully burnt and removed.

In the degreasing step, the honeycomb molded body is degreased preferably in a non-oxidative atmosphere, and more preferably in a nitrogen atmosphere. When the honeycomb molded body is degreased in a non-oxidative atmosphere, the silicon carbide particles in the honeycomb molded body are not oxidized. This allows the silicon carbide particles to be successfully sintered in the later-described firing step.

The honeycomb molded body is formed into a honeycomb degreased body containing the silicon carbide particles and the silicon carbide precursor through the degreasing step.

Fig. 3 is an enlarged view of a honeycomb degreased body obtained by degreasing the honeycomb molded body of Fig. 2.

The honeycomb degreased body 210 shown in Fig. 3 is provided with substantially circular pores 221 which are defined by dot lines. The pores 221 correspond to areas which have been occupied by the pore-forming material particles 121, which have been burnt and removed in the degreasing step. Similarly to Fig. 2, in the areas corresponding to the spaces between the pore-forming material particles 121, the silicon carbide particles 122 and the silicon carbide precursor 123 are present.

The silicon carbide particles 122 contact with one another to allow the honeycomb degreased body 210 to maintain its form. The silicon carbide precursor 123 has a binder function of binding the silicon carbide particles 122 to one another. Additionally, since the silicon carbide precursor 123 around the silicon carbide particles 122 reduces the spaces where the silicon carbide particles 122 can move, the silicon carbide particles 122 are less likely to move from their original positions and are likely to be maintained in contact with one another. Therefore, the honeycomb degreased body 210 will not deform by a small external force, and has strength enough to withstand a certain level of external force.

### (c) Firing step

The firing step is carried out to sinter the honeycomb degreased body into a porous silicon carbide honeycomb fired body.

In the firing step, the honeycomb degreased body obtained through the degreasing step is transferred to a firing furnace, and heated to sinter the silicon carbide particles in the honeycomb degreased body.

The firing temperature in the firing step is not particularly limited, but is preferably 2000°C to 2300°C, and more preferably 2100°C to 2200°C.

The period of firing in the firing step is not particularly limited, but is preferably 120 to 240 minutes.

In the case where the firing temperature and the firing period are within the above ranges, the silicon carbide can be successfully sintered.

In the firing step, the honeycomb degreased body is sintered preferably in a non-oxidative atmosphere, and more preferably in an argon atmosphere.

The honeycomb degreased body is formed into a silicon carbide honeycomb fired body through the firing step.

Also, the method for manufacturing a honeycomb structured body according to the first embodiment of the present invention can be employed to manufacture a silicon carbide honeycomb fired body having cells, each of which is sealed at either one end. In this case, after forming a honeycomb molded body, a sealing step is carried out in which a predetermined amount of a sealing material paste for forming a sealing material is charged into a predetermined end of each cell of the honeycomb molded body to seal the cells.

After the sealing step, the degreasing step and the firing step are carried out, thereby providing a silicon carbide honeycomb fired body having cells, each of which is sealed at either one end.

The sealing material paste can be prepared by mixing, for example, silicon carbide powder, a binder, a solvent, a dispersant, and a lubricant.

By sealing either one end of each cell, a honeycomb structured body having a filter function of capturing PM in exhaust gas can be manufactured.

Subsequently, a ceramic block is formed by using at least one silicon carbide honeycomb fired body.

The following demonstrates, as one example, a method for forming a ceramic block in which a plurality of silicon carbide honeycomb fired bodies are combined with one another with an adhesive layer interposed therebetween.

First, an adhesive paste layer is formed by applying an adhesive past for forming an adhesive layer to a predetermined surface of a silicon carbide honeycomb fired body, and another silicon carbide honeycomb fired body is disposed on the adhesive paste layer. These steps are repeated, thereby providing an aggregate of silicon carbide honeycomb fired bodies.

Next, the aggregate of silicon carbide honeycomb fired bodies is heated to dry and solidify the adhesive material paste layer into an adhesive layer. In this manner, a ceramic block is formed.

For example, as the adhesive material paste, a paste containing an inorganic binder, an organic binder and inorganic particles is used. The adhesive material paste may further contain inorganic fibers and/or a whisker.

Then, the ceramic block is cut.

Specifically, the periphery of the ceramic block is cut with a diamond cutter or the like such that the ceramic block is processed into a round pillar outer shape.

An outer coat material paste is applied to the circumference of the round pillar-shaped ceramic block, and dried and solidified into an outer coat layer.

As the outer coat material paste, the adhesive material paste can be used. Or, as the outer coat material paste, a paste having a different composition from that of the adhesive material paste may be used.

The outer coat layer may not be formed, and is optional depending on need.

Through the above-mentioned steps, a honeycomb structured body can be manufactured.

The following demonstrates a honeycomb structured body obtained by the first embodiment of the present invention.

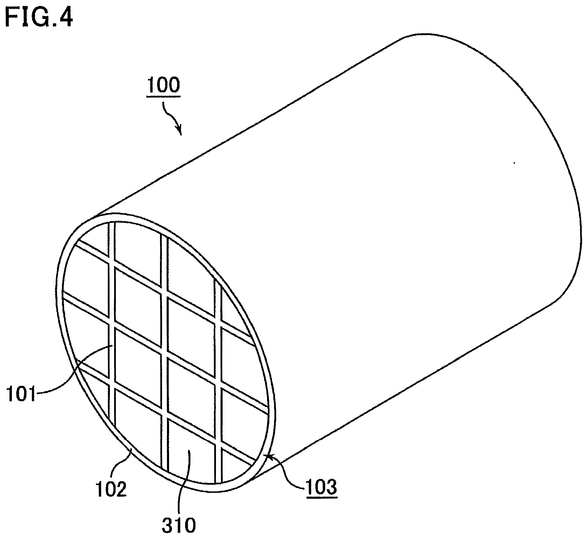

Fig. 4 is a perspective view schematically illustrating one example of honeycomb structured bodies obtained by the first embodiment of the present invention.

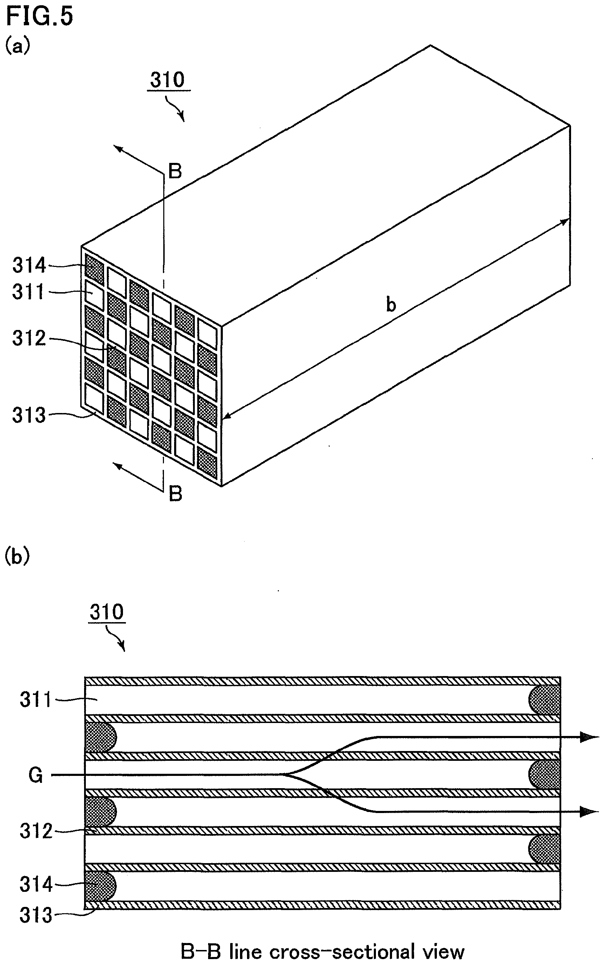

Fig. 5(a) is a perspective view schematically illustrating one example of silicon carbide honeycomb fired bodies constituting the honeycomb structured body of Fig. 4, and Fig. 5(b) is a B-B line cross-sectional view of the silicon carbide honeycomb fired body of Fig. 5(a).

The honeycomb structured body 100 shown in Fig. 4 includes a ceramic block 103 in which a plurality of silicon carbide honeycomb fired bodies 310 are combined with one another with an adhesive material layer 101 interposed therebetween, and an outer coat layer 102 around the circumference of the ceramic block 103. The outer coat layer is optional depending on need.

The silicon carbide honeycomb fired bodies 310 have the shape shown in Figs. 5(a) and 5(b).

Such a honeycomb structured body including a plurality of silicon carbide honeycomb fired bodies combined with one another is also referred to as aggregated honeycomb structured body.

In the silicon carbide honeycomb fired body 310 shown in Figs. 5(a) and 5(b), a plurality of cells 311 are disposed in parallel with one another along the longitudinal direction (the direction indicated by the arrow "b" in Fig. 5 (a)) with a cell wall 312 interposed therebetween, and its periphery is constituted by an outer wall 313. Each of the cells 311 is sealed with a sealing material 314 at either one end.

Accordingly, exhaust gas G (the exhaust gas is indicated by "G", and the flow of the exhaust gas is indicated by the arrow in Fig. 5(b)) enters from a cell 311 that is open at one end, and flows out from another cell 311 that is open at the other end after certainly passing through the cell wall 312 separating the cells 311. The cell wall 312 has a filter function of capturing PM and the like in the exhaust gas while the exhaust gas G passes through the cell wall 312.

Accordingly, such a honeycomb structured body including honeycomb sintered bodies in which each cell is sealed at either one end can be suitably used as a ceramic filter.

The silicon carbide honeycomb fired bodies constituting the honeycomb structured body obtained by the first embodiment of the present invention are mainly made of silicon carbide particles. Specifically, the silicon carbide honeycomb fired bodies contain at least 60% by weight of silicon carbide. The silicon carbide honeycomb fired bodies include, as an aggregate, assemblies of a large number of silicon carbide particles between which there are a large number of pores.

As long as the silicon carbide honeycomb fired bodies contain at least 60% by weight of silicon carbide, the silicon carbide honeycomb fired bodies may contain additional components other than silicon carbide. For example, the silicon carbide honeycomb fired bodies may contain not more than 40% by weight of silicon. The main component of the silicon carbide honeycomb fired bodies may be silicon-containing silicon carbide that is silicon carbide blended with metal silicon or may be silicon carbide bound with silicon or a silicate compound.

In particular, the silicon carbide honeycomb fired bodies preferably contain at least 98% by weight of silicon carbide or contain silicon carbide and metal silicon in a total amount of at least 98% by weight.

The silicon carbide honeycomb fired bodies constituting the honeycomb structured body obtained by the first embodiment of the present invention preferably have a porosity of 70 to 95%.

In the case where the porosity of the silicon carbide honeycomb fired bodies is within the above range, the honeycomb structured body can contain a large amount of catalyst.

The porosity of the silicon carbide honeycomb fired bodies can be controlled by, for example, varying the particle diameter and amount of the pore-forming material particles in the wet mixture, and the particle size of the silicon carbide particles in the wet mixture.

The porosity of the silicon carbide honeycomb fired bodies can be measured as follows.

First, a randomly obtained perpendicular cross section (cross cut) of a silicon carbide honeycomb fired body is photographed at a magnification of 150× with a scanning electron microscope (SEM) . Next, the SEM image is binarized (processed into a monochrome picture) . White portions correspond to the base material, and black portions correspond to pores. The boundaries of white portions and black portions in the binarized picture are determined, and the binarized picture is introduced into a software for LUZEX. On the introduced image, one-bit-wide strips are formed in the horizontal direction. In each strip, the distance between each pair of black portions (black-to-black distance) and the distance between each pair of white portions (white-to-white distance) are measured. The ratio of the black-to-black distance to the sum of the black-to-black distance and the white-to-white distance is calculated from all the measurements as the porosity of the silicon carbide honeycomb fired body.

In the honeycomb structured body obtained by the first embodiment of the present invention, a catalyst is supported on the cell walls of the silicon carbide honeycomb fired bodies.

Such a honeycomb structured body can be suitably used as a filter for purifying exhaust gas.

Preferred examples of the catalyst supported on the cell walls of the silicon carbide honeycomb fired bodies include noble metals such as platinum, palladium, and rhodium. Other examples of the catalyst include alkali metals such as potassium and sodium, alkaline-earth metals such as barium, and zeolite.

The silicon carbide honeycomb fired bodies may contain only one kind or two or more kinds of catalysts supported on the cell walls.

The honeycomb structured body obtained by the first embodiment of the present invention can be manufactured by the method for manufacturing a honeycomb structured body according to the first embodiment of the present invention.

The following describes the effects of the method for manufacturing a honeycomb structured body according to the present embodiment.
(1) In the method for manufacturing a honeycomb structured body according to the present embodiment, the honeycomb molded body contains a silicon carbide precursor that is to be converted into silicon carbide at a temperature of higher than a degreasing temperature. The silicon carbide precursor is not converted into silicon carbide through the degreasing step.

Namely, the honeycomb degreased body obtained by the method for manufacturing a honeycomb structured body according to the present embodiment contains the silicon carbide precursor. The silicon carbide precursor in the honeycomb degreased body has a binder function of binding the silicon carbide particles in the honeycomb degreased bodies together. This prevents the honeycomb degreased body from deforming by a small external force and gives the honeycomb degreased body strength enough to withstand a certain level of external force.

In the case of larger-scale manufacture of a honeycomb structured body, such honeycomb degreased bodies can be easily transferred by a machine.

The following demonstrates an example that more specifically describes the first embodiment of the present invention. The present invention is not limited only to the example.

### EXAMPLE

### (Example 1)

A mixture was prepared by mixing silicon carbide powder having an average particle diameter of 0.5 µm (15.0% by weight), acrylic resin particles having an average particle diameter of 40 µm (35.0% by weight) as a pore-forming material, and methylcellulose (2.5% by weight) as an organic binder. To the mixture were added a polycarbosilane solution (5.0% by weight), glycerin (1.5% by weight), a lubricant (UNILUB available from NOF CORPORATION) (3.0% by weight), and deionized water (38.0% by weight), and the mixture was kneaded with a plastograph (model: W30/W50, available from Brabender) into a wet mixture for forming honeycomb molded bodies.

The polycarbosilane solution was a solution prepared by dissolving polycarbosilane ("Tyranno polymer VZ-100" available from Ube Industries, Ltd.) as a silicon carbide precursor in xylene to a concentration of 60% by weight.

The wet mixture was charged into a hydraulic jack-type batch extruder (P-18 available from Riken Seiki Co., Ltd.), extruded using a die, and cut into a shape substantially the same as the shape shown in Figs. 5(a) and 5(b). Thus, raw honeycomb molded bodies with open cells were formed.

Next, the raw honeycomb molded bodies were dried with a microwave drying apparatus at 150°C for 180 minutes. In this manner, honeycomb molded bodies were formed.

A sealing material paste was charged into predetermined cells of the honeycomb molded bodies to seal the cells.

The sealing material paste was prepared by mixing the silicon carbide powder, a binder, a solvent, a dispersant, and a lubricant.

The honeycomb molded bodies with sealed cells were degreased in a 100% (by volume) nitrogen atmosphere at 400°C for 120 minutes into honeycomb degreased bodies.

The honeycomb degreased bodies obtained by the degreasing step were transferred to a firing furnace, and fired in an argon atmosphere at 2200°C for 160 minutes into silicon carbide honeycomb fired bodies.

The obtained silicon carbide honeycomb fired bodies had the following features: size: 10 mm × 10 mm × 10 mm; number of cells (cell density) : 31.0 cells/cm² (200 cells/inch²) ; and thickness of cell wall: 0.4 mm.

Next, a heat-resistant adhesive material paste containing alumina fibers having an average fiber length of 20 µm (30% by weight), silicon carbide particles having an average particle diameter of 0.6 µm (21% by weight), silica sol (15% by weight), carboxymethylcellulose (5.6% by weight), and water (28.4% by weight) was prepared.

The adhesive material paste was applied to surface(s) of the silicon carbide honeycomb fired bodies, and 16 silicon carbide honeycomb fired bodies in total were bonded through the adhesive material paste in four rows and four columns. In this manner, an aggregate of silicon carbide honeycomb fired bodies was obtained.

The aggregate of silicon carbide honeycomb fired bodies was heated at 180°C for 45 minutes to dry and solidify the adhesive material paste. Consequently, a rectangular pillar-shaped ceramic block having a 1.0 mm thick adhesive material layer was manufactured.

Subsequently, the periphery of the ceramic block was cut with a diamond cutter such that the ceramic block was processed to be a round pillar outer shape.

Next, an outer coat material paste was applied to the circumference of the processed ceramic block having a round pillar outer shape to form an outer coat material paste layer.

The outer coat material paste was a paste having the same composition as the adhesive material paste.

The outer coat material paste layer was dried and solidified at 120°C for 60 minutes into an outer coat layer. In this manner, a round pillar-shaped honeycomb structured body having an outer coat layer constituting its periphery was obtained.

It was confirmed that the honeycomb degreased bodies of Example 1 did not deform when picked up with a tweezer. Such honeycomb degreased bodies are expected to sufficiently withstand being transferred by a machine in a large-scale manufacture scheme.

### (Other embodiments)

In the above-described method for manufacturing a honeycomb structured body according to the first embodiment of the present invention, a ceramic block in which a plurality of silicon carbide honeycomb fired bodies are combined with one another with an adhesive material layer interposed therebetween is produced.

However, in a method for manufacturing a honeycomb structured body according to an embodiment of the present invention, a ceramic block may be made using only one silicon carbide honeycomb fired body. Namely, the method can be employed to manufacture a honeycomb structured body including a single silicon carbide honeycomb fired body. Such a honeycomb structured body including a single silicon carbide honeycomb fired body is referred to as "integrated honeycomb structured body".

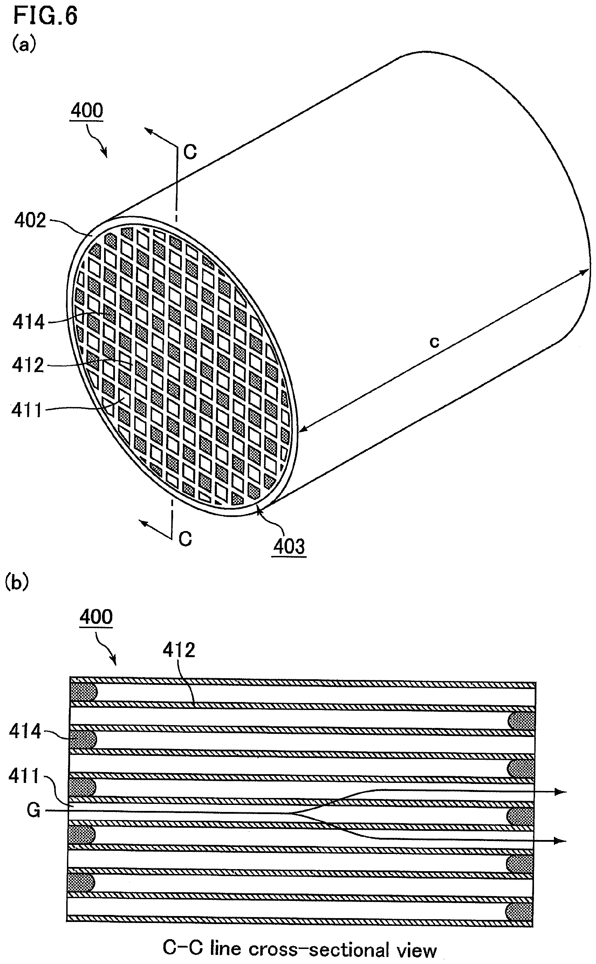

Fig. 6(a) is a perspective view schematically illustrating one example of honeycomb structured bodies obtained by another embodiment of the present invention, and Fig. 6(b) is a C-C line cross-sectional view of the honeycomb structured body of Fig. 6(a).

The honeycomb structured body 400 shown in Figs. 6(a) and 6(b) includes a ceramic block 403 including a substantially round pillar-shaped silicon carbide honeycomb fired body in which a large number of cells 411 are disposed in parallel with one another along the longitudinal direction (the direction indicated by the arrow "c" in Fig. 6(a)) with a cell wall 412 interposed therebetween, and an outer coat layer 402 around the ceramic block 403. The outer coat layer is optional depending on need.

Each of the cells 411 of the honeycomb structured body 400 shown in Figs. 6(a) and 6(b) is sealed with a sealing material 414 at either one end. Accordingly, exhaust gas G (the exhaust gas is indicated by "G", and the flow of the exhaust gas is indicated by the arrow in Fig. 6 (b)) enters from a cell 411 that is open at one end, and flows out from another cell 411 that is open at the other end after certainly passing through the cell wall 412 separating the cells 411. The cell wall 412 has a filter function of capturing PM and the like.

In the case of manufacture of an integrated honeycomb structured body, a honeycomb molded body is formed by extrusion in the same manner as in the first embodiment of the present invention, except that the honeycomb molded body is larger than the honeycomb molded bodies described in the first embodiment of the present invention, and has a different outer shape.

Namely, a honeycomb molded body is formed using a die having a similar structure to that of the die used in the first embodiment of the present invention, except that the cross section corresponds to the shape of the desired honeycomb molded body.

Other steps are the same as those of the method for manufacturing a honeycomb structured body according to the first embodiment of the present invention. It should be noted that since the desired honeycomb structured body includes only one silicon carbide honeycomb fired body, the step of forming an aggregate of silicon carbide honeycomb fired bodies is not necessary. In the case where the honeycomb molded body has a round pillar shape, the step of cutting the periphery of the ceramic block is not necessary.

A method for manufacturing a honeycomb structured body according to an embodiment of the present invention can be employed to form silicon carbide honeycomb fired bodies having different cross-sectional shapes, and to manufacture a ceramic block in which silicon carbide honeycomb fired bodies of different kinds are combined with one another with an adhesive material layer by combining the silicon carbide honeycomb fired bodies. This eliminates the need of the step of cutting the periphery of the ceramic block.

Silicon carbide honeycomb fired bodies having different cross-sectional shapes can be formed by using dies having varied shapes. In this case, dies having a similar structure to that of the die used in the first embodiment of the present invention can be employed to form honeycomb molded bodies except that the cross-sectional shapes of the dies correspond to the shapes of the desired honeycomb molded bodies.

In case where a method for manufacturing a honeycomb structured body according to an embodiment of the present invention is employed to manufacture a ceramic block in which a plurality of silicon carbide honeycomb fired bodies are combined with one another with an adhesive material layer interposed therebetween, the following technique can be used instead of applying an adhesive material paste to surface(s) of each silicon carbide honeycomb fired body: for example, silicon carbide honeycomb fired bodies are provisionally fixed in a frame having the same shape as a desired ceramic block (or a desired aggregate of silicon carbide honeycomb fired bodies), and an adhesive material paste is injected between the silicon carbide honeycomb fired bodies.

In a method for manufacturing a honeycomb structured body according to an embodiment of the present invention, the sealing step of charging the sealing material paste such that each cell of honeycomb molded bodies is sealed at either one end is not essential.

A honeycomb structured body including a silicon carbide honeycomb fired body having cells that are open at both ends can be suitably used as a catalyst carrier.

In the case where a catalyst is supported on cell walls of silicon carbide honeycomb fired bodies in a method for manufacturing a honeycomb structured body according to an embodiment of the present invention, the catalyst is preferably, for example, a noble metal such as platinum, palladium, or rhodium. Other examples of the catalyst include alkali metals such as potassium and sodium, alkaline-earth metals such as barium, and zeolite. Any of these catalysts can be used alone, or two or more of these may be used in combination.

In the above-described method for manufacturing a honeycomb structured body according to the first embodiment of the present invention, the silicon carbide powders used have the same average particle diameter.

However, in a method for manufacturing a honeycomb structured body according to an embodiment of the present invention, silicon carbide powders having different average particle diameters may be used.

The diameter of pores in silicon carbide honeycomb fired bodies can be controlled by changing the diameter of the silicon carbide powders.

In a method for manufacturing a honeycomb structured body according to an embodiment of the present invention, the organic binder in the wet mixture is not particularly limited, and examples include methylcellulose, carboxymethylcellulose, hydroxyethylcellulose, and polyethylene glycol. Preferred among these is methylcellulose. The organic binder content of the wet mixture is preferably 2.5% by weight.

In a method for manufacturing a honeycomb structured body according to an embodiment of the present invention, the wet mixture preferably contains at least one of a plasticizer and a lubricant.

The plasticizer is not particularly limited, and glycerin can be used, for example.

The lubricant is also not particularly limited, and examples include polyoxyalkylene compounds such as polyoxyethylene alkyl ethers and polyoxypropylene alkyl ethers.

More specifically, polyoxyethylene monobutyl ether and polyoxypropylene monobutyl ether can be mentioned as examples of the lubricant.

In some cases, the wet mixture may be free from the plasticizer and the lubricant.

In a method for manufacturing a honeycomb structured body according to an embodiment of the present invention, a dispersion medium may be used to prepare the wet mixture . Examples of the dispersion medium include water, organic solvents such as benzene, and alcohols such as methanol.

The wet mixture may further contain a forming auxiliary.

The forming auxiliary is not particularly limited, and examples include ethylene glycol, dextrin, fatty acids, fatty acid soaps, and polyalcohols.

Examples of the inorganic binder contained in the adhesive material paste and the outer coat material paste include silica sol and alumina sol. Any of these may be used alone, or two or more of these may be used in combination. Silica sol is preferable among inorganic binders.

Examples of the organic binder contained in the adhesive material paste and the outer coat material paste include polyvinyl alcohol, methylcellulose, ethylcellulose, and carboxymethylcellulose. Any of these may be used alone, or two or more of these may be used in combination. Carboxymethylcellulose is preferable among organic binders.

Examples of the inorganic particles contained in the adhesive material paste and the outer coat material paste include carbide particles and nitride particles. Specific examples include silicon carbide particles, silicon nitride particles, and boron nitride particles. Any of these may be used alone, or two or more of these may be used in combination. Silicon carbide particles are preferable among inorganic particles because of high heat conductivity.

Examples of the inorganic fibers and/or whisker contained in the adhesive material paste and the outer coat material paste include inorganic fibers and/or whisker including silica-alumina, mullite, alumina, silica or the like. Any of these may be used alone, or two or more of these may be used in combination. Alumina fibers are preferable among inorganic fibers. The inorganic fibers may be biosoluble fibers.

The adhesive material paste and the outer coat material paste may optionally further contain a pore-forming agent such as a balloon which is a minute hollow spherical body containing oxide ceramics as a component, spherical acrylic particles, or graphite. The balloon is not particularly limited, and examples thereof include alumina balloon, glass microballoon, silas balloon, fly ash balloon (FA balloon), and mullite balloon. Preferred among these is alumina balloon.

In a method for manufacturing a honeycomb structured body according to an embodiment of the present invention, the shape of the honeycomb structured body to be manufactured is not limited to the round pillar shape, and may be any pillar shape such as a cylindroid shape, a pillar shape with a racetrack end face and a polygonal pillar shape.

In a method for manufacturing a honeycomb structured body according to an embodiment of the present invention, the cell density of a cross section of a silicon carbide honeycomb fired body constituting a honeycomb structured body to be manufactured is not particularly limited, and the preferable lower limit of the cell density is 31.0 cells/cm² (200 cells/inch²), and the preferable upper limit is 93.0 cells/cm² (600 cells/inch²), the more preferable lower limit is 38.8 cells/cm² (250 cells/inch²), and the more preferable upper limit is 77.5 cells/cm² (500 cells/inch²).

In a method for manufacturing a honeycomb structured body according to an embodiment of the present invention, the cell wall thickness of a silicon carbide honeycomb fired body constituting a honeycomb structured body to be manufactured is not particularly limited, but is preferable 0.1 to 0.4 mm.

If the cell wall thickness is smaller than 0.1 mm, the cell wall is too thin to ensure the strength of the silicon carbide honeycomb fired body. On the other hand, if the cell wall thickness is larger than 0.4 mm, the cell wall tends to cause pressure loss of the honeycomb structured body.

In a method for manufacturing a honeycomb structured body according to an embodiment of the present invention, the thickness of the outer wall of a silicon carbide honeycomb fired body constituting a honeycomb structured body to be manufactured may be the same as the thickness of the cell wall, or may be larger than the thickness of the cell wall, but is preferably larger than the thickness of the cell wall from the viewpoint of strength of the silicon carbide honeycomb fired body.

In the case where the outer wall of the silicon carbide honeycomb fired body is thicker than the cell wall, the outer wall is preferably 1.3 to 3.0 times as thick as the cell wall.

In a silicon carbide honeycomb fired body constituting a honeycomb structured body to be manufactured by a method for manufacturing a honeycomb structured body according to an embodiment of the present invention, the shape of each of cells in a cross section perpendicular to the longitudinal direction of the silicon carbide honeycomb fired body is not particularly limited, and may be any shape such as circular, elliptical, quadrangle, pentagonal, hexagonal, trapezoidal, and octagonal shapes. Moreover, various shapes may be employed in combination.

The essential features of the method for manufacturing a honeycomb structured body including a porous silicon carbide honeycomb fired body of the present invention are that the method includes a honeycomb molded body preparing step of preparing a honeycomb molded body in which a large number of cells are longitudinally disposed in parallel with one another with a cell wall interposed therebetween; a degreasing step of degreasing the honeycomb molded body into a honeycomb degreased body; and a firing step of firing the honeycomb degreased body into the porous silicon carbide honeycomb fired body, and that the honeycomb molded body contains silicon carbide particles, pore-forming material particles, and a silicon carbide precursor that is to be converted into silicon carbide at a temperature of higher than a degreasing temperature, wherein the ratio between the average particle diameter of the silicon carbide particles and the average particle diameter of the pore-forming material particles (silicon carbide particle) : (pore-forming material particle) is 1:40 to 1:200.

These essential features can be combined with various features described in the first embodiment and other embodiments of the present invention (for example, the kind and amount of the silicon carbide precursor, the kind and amount of the pore-forming material particles, the necessity and conditions of the sealing step, the conditions of the degreasing step, and the conditions of the firing step) to produce desired effects.

### REFERENCE SIGNS LIST

- 100, 400: Honeycomb structured body
- 101: Adhesive material layer
- 102, 402: Outer coat layer
- 103, 403: Ceramic block
- 110: Honeycomb molded body
- 111, 311, 411: Cell
- 112, 312, 412: Cell wall
- 113, 313: Outer wall
- 121: Pore-forming material particle
- 122: Silicon carbide particle
- 123: Silicon carbide precursor
- 210: Honeycomb degreased body
- 221: Pore
- 310: Silicon carbide honeycomb fired body
- G: Exhaust gas

## Claims

1. A method for manufacturing a honeycomb structured body including a porous silicon carbide honeycomb fired body, comprising:
a honeycomb molded body preparing step of preparing a honeycomb molded body in which a large number of cells are longitudinally disposed in parallel with one another with a cell wall interposed therebetween;
a degreasing step of degreasing the honeycomb molded body into a honeycomb degreased body; and
a firing step of firing the honeycomb degreased body into the porous silicon carbide honeycomb fired body,
wherein the honeycomb molded body contains silicon carbide particles, pore-forming material particles, and a silicon carbide precursor that is to be converted into silicon carbide at a temperature of higher than a degreasing temperature,
wherein the ratio between the average particle diameter of the silicon carbide particles and the average particle diameter of the pore-forming material particles (silicon carbide particle):(pore-forming material particle) is 1:40 to 1:200.

2. The method for manufacturing a honeycomb structured body according to claim 1,
wherein the silicon carbide precursor is converted into silicon carbide at a temperature equal to or lower than a firing temperature.

3. The method for manufacturing a honeycomb structured body according to claim 1 or 2,
wherein the silicon carbide precursor is converted into silicon carbide at 500°C to 2000°C.

4. The method for manufacturing a honeycomb structured body according to any one of claims 1 to 3,
wherein the silicon carbide precursor is a polymer.

5. The method for manufacturing a honeycomb structured body according to any one of claims 1 to 4,
wherein the silicon carbide precursor is a polycarbosilane.

6. The method for manufacturing a honeycomb structured body according to any one of claims 1 to 5,
wherein the silicon carbide precursor constitutes 2 to 10% by weight of the honeycomb molded body.

7. The method for manufacturing a honeycomb structured body according to any one of claims 1 to 6,
wherein the ratio between the weight of silicon carbide particles contained in the honeycomb molded body and the weight of pore-forming material particles contained in the honeycomb molded body (silicon carbide particle):(pore-forming material particle) is 20:80 to 40:60.

8. The method for manufacturing a honeycomb structured body according to any one of claims 1 to 7,
wherein the pore-forming material particles are acrylic resin particles.

9. The method for manufacturing a honeycomb structured body according to any one of claims 1 to 8,
wherein the honeycomb molded body preparing step includes molding a ceramic material containing the silicon carbide particles, the pore-forming material particles, and the silicon carbide precursor that is to be converted into silicon carbide at a temperature of higher than the degreasing temperature into the honeycomb molded body.

## Patentansprüche

1. Verfahren zur Herstellung eines wabenartig strukturierten Körpers, einschließend einen porösen, wabenartigen, gebrannten Siliziumkarbidkörper, umfassend:
einen wabenartiger-Formkörper-Herstellungsschritt des Herstellens eines wabenartigen Formkörpers, in dem eine große Anzahl von Zellen in Längsrichtung parallel zueinander angeordnet sind, wobei eine Zellwand dazwischen eingefügt ist;
einen Entfettungsschritt des Entfettens des wabenartigen Formkörpers zu einem wabenartigen, entfetteten Körper; und
einen Brennschritt des Brennens des wabenartigen, entfetteten Körpers zu dem porösen, wabenartigen, gebrannten Siliziumkarbidkörper,
wobei der wabenartige Formkörper Siliziumkarbidteilchen, Teilchen eines porenbildenden Materials und einen Siliziumkarbidvorläufer, der in Siliziumkarbid bei einer Temperatur, die höher als die Entfettungstemperatur ist, umgewandelt werden soll, enthält,
wobei das Verhältnis zwischen dem durchschnittlichen Teilchendurchmesser der Siliziumkarbidteilchen und dem durchschnittlichen Teilchendurchmesser der Teilchen eines porenbildenden Materials (Siliziumkarbidteilchen):(Teilchen eines porenbildenden Materials) 1:40 bis 1:200 beträgt.

2. Verfahren zur Herstellung eines wabenartig strukturierten Körpers nach Anspruch 1,
wobei der Siliziumkarbidvorläufer in Siliziumkarbid bei einer Temperatur, die gleich oder niedriger als eine Brenntemperatur ist, umgewandelt wird.

3. Verfahren zur Herstellung eines wabenartig strukturierten Körpers nach Anspruch 1 oder 2,
wobei der Siliziumkarbidvorläufer in Siliziumkarbid bei 500°C bis 2000°C umgewandelt wird.

4. Verfahren zur Herstellung eines wabenartig strukturierten Körpers nach einem der Ansprüche 1 bis 3,
wobei der Siliziumkarbidvorläufer ein Polymer ist.

5. Verfahren zur Herstellung eines wabenartig strukturierten Körpers nach einem der Ansprüche 1 bis 4,
wobei der Siliziumkarbidvorläufer ein Polycarbosilan ist.

6. Verfahren zur Herstellung eines wabenartig strukturierten Körpers nach einem der Ansprüche 1 bis 5,
wobei der Siliziumkarbidvorläufer 2 bis 10 Gew.-% des wabenartigen Formkörpers bildet.

7. Verfahren zur Herstellung eines wabenartig strukturierten Körpers nach einem der Ansprüche 1 bis 6,
wobei das Verhältnis zwischen dem Gewicht der Siliziumkarbidteilchen, die in dem wabenartigen Formkörper enthalten sind, und dem Gewicht der Teilchen eines porenbildenden Materials, die in dem wabenartigen Formkörper enthalten sind, (Siliziumkarbidteilchen):(Teilchen eines porenbildenden Materials) 20:80 bis 40:60 beträgt.

8. Verfahren zur Herstellung eines wabenartig strukturierten Körpers nach einem der Ansprüche 1 bis 7,
wobei die Teilchen eines porenbildenden Materials Acrylharzteilchen sind.

9. Verfahren zur Herstellung eines wabenartig strukturierten Körpers nach einem der Ansprüche 1 bis 8,
wobei der wabenartiger-Formkörper-Herstellungsschritt das Formen eines keramischen Materials, das die Siliziumkarbidteilchen, die Teilchen eines porenbildenden Materials und den Siliziumkarbidvorläufer, der in Siliziumkarbid bei einer Temperatur, die höher als die Entfettungstemperatur ist, umgewandelt werden soll, enthält, in den wabenartigen Formkörper einschließt.

## Revendications

1. Procédé de fabrication d'un corps structuré en nid d'abeilles comprenant un corps cuit en nid d'abeilles en carbure de silicium poreux, comprenant:
une étape de préparation du corps moulé en nid d'abeilles où l'on prépare un corps moulé en nid d'abeilles dans lequel un grand nombre de cellules sont disposées longitudinalement en parallèle l'une avec l'autre avec une paroi cellulaire interposée;
une étape de dégraissage où l'on dégraisse le corps moulé en nid d'abeilles pour obtenir un corps dégraissé en nid d'abeilles; et
une étape de cuisson où l'on cuit le corps dégraissé en nid d'abeilles pour obtenir un corps cuit en nid d'abeilles en carbure de silicium poreux,
dans lequel le corps moulé en nid d'abeilles contient des particules de carbure de silicium, des particules de matière porogène et un précurseur de carbure de silicium qui doit être converti en carbure de silicium à une température plus élevée que la température de dégraissage,
dans lequel le rapport entre le diamètre particulaire moyen des particules de carbure de silicium et le diamètre particulaire moyen des particules de matière porogène (particule de carbure de silicium):(particule de matière porogène) va de 1:40 à 1:200.

2. Procédé de fabrication d'un corps structuré en nid d'abeilles selon la revendication 1,
dans lequel le précurseur de carbure de silicium est converti en carbure de silicium à une température égale ou inférieure à une température de cuisson.

3. Procédé de fabrication d'un corps structuré en nid d'abeilles selon la revendication 1 ou 2,
dans lequel le précurseur de carbure de silicium est converti en carbure de silicium entre 500°C et 2000°C.

4. Procédé de fabrication d'un corps structuré en nid d'abeilles selon l'une quelconque des revendications 1 à 3,
dans lequel le précurseur de carbure de silicium est un polymère.

5. Procédé de fabrication d'un corps structuré en nid d'abeilles selon l'une quelconque des revendications 1 à 4,
dans lequel le précurseur de carbure de silicium est un polycarbosilane.

6. Procédé de fabrication d'un corps structuré en nid d'abeilles selon l'une quelconque des revendications 1 à 5,
dans lequel le précurseur de carbure de silicium constitue 2 à 10% en poids du corps moulé en nid d'abeilles.

7. Procédé de fabrication d'un corps structuré en nid d'abeilles selon l'une quelconque des revendications 1 à 6,
dans lequel le rapport entre la masse des particules de carbure de silicium contenues dans le corps moulé en nid d'abeilles et la masse des particules de matière porogène contenues dans le corps moulé en nid d'abeilles (particule de carbure de silicium):(particule de matière porogène) va de 20:80 à 40:60.

8. Procédé de fabrication d'un corps structuré en nid d'abeilles selon l'une quelconque des revendications 1 à 7,
dans lequel les particules de matière porogène sont des particules de résine acrylique.

9. Procédé de fabrication d'un corps structuré en nid d'abeilles selon l'une quelconque des revendications 1 à 8,
dans lequel l'étape de préparation du corps moulé en nid d'abeilles comprend le moulage d'une matière céramique contenant les particules de carbure de silicium, les particules de matière porogène et le précurseur de carbure de silicium qui doit être converti en carbure de silicium à une température plus élevée que la température de dégraissage dans le corps moulé en nid d'abeilles.
